# EUROPÄISCHE PATENTSCHRIFT

(11) **EP 3 433 139 B1**
(45) Veröffentlichungstag und Bekanntmachung des Hinweises auf die Patenterteilung: **26.05.2021**
(21) Anmeldenummer: 16788474.1
(22) Anmeldetag: 21.10.2016
(51) Int. Cl.: B60R 25/24, G07C 9/00

(54) **AUTORISIERUNG DER NUTZUNG EINES KRAFTFAHRZEUGS**
AUTHORIZING THE USE OF A MOTOR VEHICLE
AUTORISATION D'UTILISER UN VÉHICULE À MOTEUR

(30) Priorität: 22.03.2016 DE 102016204748
(43) Veröffentlichungstag der Anmeldung: 30.01.2019
(73) Patentinhaber: Bayerische Motoren Werke Aktiengesellschaft, 80809 München (DE)
(72) Erfinder: HEINBOCKEL, Stefan, 81735 München (DE); WAGATHA, Helmut, 85764 Oberschleissheim (DE); HOCKE, Fredrik, 80336 München (DE); WISTORF, Ralf, 81737 München (DE)
(86) Internationale Anmeldenummer: PCT/EP2016/075332
(87) Internationale Veröffentlichungsnummer: WO 2017/162316

(56) Entgegenhaltungen:
- EP-A1- 1 403 653
- EP-A2- 1 184 236
- EP-A2- 2 498 226
- DE-A1- 19 712 911
- DE-A1-102011 079 421
- DE-B3-102005 013 910
- US-A1- 2013 063 247

## Beschreibung

Die Erfindung betrifft insbesondere ein Verfahren zur Autorisierung der Nutzung eines Kraftfahrzeugs, das mindestens eine erste und eine zweite Antenne aufweist, wobei die erste Antenne und die zweite Antenne räumlich voneinander beabstandet sind. Bei dem Kraftfahrzeug handelt es sich insbesondere um ein zwei - oder vierrädriges Kraftfahrzeug.

Aus der DE 10 2005 013 910 A1 ist ein gattungsgemäßes Verfahren zur Autorisierung der Nutzung eines Kraftfahrzeugs bekannt.

Bei solchen bekannten Verfahren ist es wünschenswert, diese gegen Manipulationen weiter zu verbessern.

Die Aufgabe der Erfindung besteht insbesondere in der Bereitstellung eines Verfahrens zur Autorisierung der Nutzung eines Kraftfahrzeugs mit einem verbesserten Schutz gegen Manipulationen.

Diese Aufgabe wird insbesondere durch ein Verfahren zur Autorisierung der Nutzung eines Kraftfahrzeugs mit den Merkmalen des unabhängigen Verfahrensanspruchs gelöst. Vorteilhafte Ausgestaltungen des erfindungsgemäßen Verfahrens sind Gegenstand der abhängigen Verfahrensansprüche.

Das erfindungsgemäße Verfahren geht aus von einem Verfahren zur Autorisierung der Nutzung eines Kraftfahrzeugs, insbesondere ein zwei - oder vierrädriges Kraftfahrzeug, das mindestens eine erste und eine zweite Antenne aufweist, wobei die erste Antenne und die zweite Antenne räumlich voneinander beabstandet sind, mittels eines tragbaren Identifikationsgebers, der eine Identifikationsgeber-Antenne aufweist.

In einem ersten Schritt sendet die erste Fahrzeugantenne ein erstes Signal aus, das von der Identifikationsgeber-Antenne empfangen wird.

In einem zweiten Schritt ermittelt der Identifikationsgeber zumindest eine der räumlichen Komponenten des ersten elektromagnetischen Feldes des empfangenen ersten Signals, vorzugsweise unter Verwendung eines winkelauflösenden Magnetfeldsensors.

In einem dritten Schritt sendet die zweite Fahrzeugantenne ein zweites Signal aus, das von der Identifikationsgeber-Antenne empfangen wird.

In einem vierten Schritt ermittelt der Identifikationsgeber zumindest eine der räumlichen Komponenten des zweiten elektromagnetischen Feldes des empfangenen zweiten Signals, vorzugsweise unter Verwendung des winkelauflösenden Magnetfeldsensors.

In einem fünften Schritt überträgt der Identifikationsgeber die ermittelte zumindest eine räumliche Komponente des ersten elektromagnetischen Feldes des empfangenen ersten Signals und die ermittelte zumindest eine räumliche Komponente des zweiten elektromagnetischen Feldes des empfangenen zweiten Signals oder erste entsprechende Daten zum Fahrzeug, und

in einem sechsten Schritt ermittelt ein erster Rechner, vorzugsweise ein Rechner im Kraftfahrzeug, den Winkel zumindest zwischen der ermittelten räumlichen Komponente des ersten elektromagnetischen Feldes des empfangenen ersten Signals und der ermittelten räumlichen Komponente des zweiten elektromagnetischen Feldes des empfangenen zweiten Signals.

Dieses bekannte Verfahren wird dadurch erfindungsgemäß weitergebildet, dass in einem weiteren Schritt die erste Fahrzeugantenne anstelle des ersten Signals das zweite Signal oder ein dem zweiten Signal ähnliches Signal aussendet und die zweite Fahrzeugantenne anstelle des zweiten Signals das erste Signal oder ein dem ersten Signal ähnliches Signal aussendet. Das Kraftfahrzeug stellt bevorzugt nur dann ein erstes Autorisierungssignal zur Autorisierung der Nutzung des Kraftfahrzeugs bereit, wenn der ermittelte erste Winkel einen vorbestimmten ersten Schwellenwert überschreitet.

Zusammenfassend kann durch das erfindungsgemäße Verfahren mithilfe von mindestens zwei räumlich separierten bzw. beabstandeten Sendern die Position des Empfängers bzw. des Identifikationsgeberswinkelaufgelöst bestimmt werden. Werden die Signale der beabstandeten Sender in manipulativer Absicht durch einen Repeater weitergeleitet, wird die Laufzeit verlängert und die Winkelinformation geht verloren. Das erfindungsgemäße winkelauflösende Verfahren kann eine solche Manipulation der Funkstrecke erkennen, indem die Parallelität der Signale von dem Identifikationsgeber und/oder von dem Kraftfahrzeug erkannt wird und dieser und/oder dieses die Aussendung eines Autorisierungssignals verhindert.

Bei einer bevorzugten Weiterbildung des erfindungsgemäßen Verfahrens ist vorgesehen, dass der vorbestimmte erste Schwellenwert von dem Kraftfahrzeug bereitgestellt und der erste Schwellenwert von einem Rechner in dem Kraftfahrzeug mit dem ermittelten ersten Winkel verglichen wird. Das Kraftfahrzeug stellt bevorzugt nur dann das erste Autorisierungssignal bereit, wenn der ermittelte erste Winkel den vorbestimmten ersten Schwellenwert überschreitet.

Entsprechend einer weiteren bevorzugten Ausgestaltung des erfindungsgemäßen Verfahrens ist vorgesehen, dass das erste Signal oder ein dem ersten Signal ähnliches Signal und das zweite Signal oder ein dem zweiten Signal ähnliches Signal mehrfach abwechselnd von der ersten oder der zweiten Fahrzeugantenne gesendet, von dem Identifikationsgeber empfangen und die jeweils ermittelten zeitlich unterschiedlichen Winkel mit dem betreffenden vorbestimmten ersten Schwellenwert und nachfolgend mit dem betreffenden vorbestimmten zweiten Schwellenwert verglichen werden. Bei einer jeweiligen Überschreitung des betreffenden ersten und zweiten vorbestimmten Schwellenwerts wird vorzugsweise ein erstes und/oder ein zweites Autorisierungssignal zur Autorisierung der Nutzung des Kraftfahrzeugs von dem Kraftfahrzeug bereitgestellt.

Bei einer bevorzugten Ausführungsform des erfindungsgemäßen Verfahrens ist vorgesehen, dass ein vorbestimmter erster und/oder ein vorbestimmter zweiter Schwellenwert von dem Kraftfahrzeug in verschlüsselter Datenform und/oder in anderen Daten verborgen bereitgehalten wird.

Alternativ oder ergänzend ist bei einer Ausführungsform des erfindungsgemäßen Verfahrens vorgesehen, dass die erste Fahrzeugantenne mehrfach unmittelbar hintereinander ein erstes Signal aussendet bevor die zweite Fahrzeugantenne einmal oder mehrfach unmittelbar hintereinander ein zweites Signal aussendet und die ersten und zweiten Signale von dem Identifikationsgeber zur Ermittlung des Winkels zwischen den räumlichen Komponenten des ersten und des zweiten elektromagnetischen Feldes empfangen werden.

Entsprechend einer bevorzugten Weiterbildung des erfindungsgemäßen Verfahrens wird die Aussendung des ersten und/oder zweiten Signals zufallsgesteuert von dem Kraftfahrzeug vorgenommen.

Bei einer Ausgestaltung des erfindungsgemäßen Verfahrens wird die die Signalstärke bzw. Feldstärke der ersten und/oder der zweiten Fahrzeugantenne im Verlauf der Autorisierungsprüfung variiert.

Entsprechend einer Weiterbildung des erfindungsgemäßen Verfahrens wird die Signalstärke bzw. Feldstärke der ersten und/oder der zweiten Fahrzeugantenne im Verlauf der Autorisierungsprüfung und/oder von Autorisierungsprüfung zu Autorisierungsprüfung zufallsgesteuert von dem Kraftfahrzeug variiert.

Durch die vorstehenden erfindungsgemäßen optionalen Maßnahmen werden Manipulationen zusätzlich erschwert bzw. verhindert.

Alternativ oder ergänzend kann bei einer Ausgestaltung des erfindungsgemäßen Verfahrens vorgesehen sein, dass der Zeitabstand zwischen der Aussendung des ersten Signals durch die erste Fahrzeugantenne und der Aussendung des zweiten Signals durch die zweite Fahrzeugantenne zeitlich so kurz - aber verschieden von Null - gewählt wird, dass der vom Fahrer mitgeführte Identifikationsgeber beim Zugehen des Fahrers auf das Fahrzeug weitgehend nicht bewegt wird. Hierdurch wird die Ermittlung des Winkels zumindest zwischen der ermittelten räumlichen Komponente des ersten elektromagnetischen Feldes des empfangenen ersten Signals und der ermittelten räumlichen Komponente des zweiten elektromagnetischen Feldes des empfangenen zweiten Signals durch die Bewegung des Fahrers bzw. durch die damit verbundene Bewegung des Identifikationsgebers weitgehend nicht verfälscht bzw. nicht unbrauchbar.

Bei einer Weiterbildung des erfindungsgemäßen Verfahrens ist vorgesehen, dass das Kraftfahrzeug eine weitere, dritte Antenne aufweist, die von der ersten und der zweiten Antenne jeweils räumlich beabstandet ist und dass in analoger Weise der Winkel zumindest zwischen der ermittelten räumlichen Komponente des ersten elektromagnetischen Feldes des empfangenen ersten Signals und der ermittelten räumlichen Komponente des dritten elektromagnetischen Feldes eines von der dritten Antenne ausgesandten und von dem Identifikationsgeber empfangenen dritten Signals bestimmt wird.

Auch diese optionalen Maßnahmen sind in vorteilhafter Weise dazu geeignet, das Risiko von Manipulationen weiter zu verringern bzw. diese deutlich zu erschweren.

Entsprechend einer Ausführungsform des erfindungsgemäßen Verfahrens ist vorgesehen, dass die vom Identifikationsgeber ermittelten räumlichen Komponenten des ersten elektromagnetischen Feldes des empfangenen ersten Signals, die x-, y- und z-Komponenten des elektromagnetischen Feldes eines ersten kartesischen Koordinatensystems sind.

Bei einer Ausgestaltung des erfindungsgemäßen Verfahrens ist vorgesehen, dass die vom Identifikationsgeber ermittelten räumlichen Komponenten des zweiten elektromagnetischen Feldes des empfangenen zweiten Signals die x-, y- und z-Komponenten des elektromagnetischen Feldes weitgehend die Komponenten in Bezug auf das erste kartesische Koordinatensystem sind, weitgehend, weil sich das bei der Ermittlung der Komponenten zugrunde liegende kartesische Koordinatensystem bzw. Bezugssystem bei geringfügigen Bewegungen des Identifikationsgebers in sehr kurzen Zeiträumen zwischen der wiederholten Ermittlung der Winkel räumlich nur geringfügig verändert.

Entsprechend einer Weiterbildung des erfindungsgemäßen Verfahrens ist vorgesehen, dass die vom Identifikationsgeber ermittelten räumlichen Komponenten des dritten elektromagnetischen Feldes des empfangenen dritten Signals die x-, y- und z-Komponenten des elektromagnetischen Feldes weitgehend die des ersten kartesischen Koordinatensystems sind.

Bei einer bevorzugten Ausführungsform des erfindungsgemäßen Verfahrens ist vorgesehen, dass mindestens ein erster Vektor aus den vom Identifikationsgeber ermittelten x-, y- und z-Komponenten des ersten elektromagnetischen Feldes des empfangenen ersten Signals und ein zweiter Vektor aus den vom Identifikationsgeber ermittelten x-, y- und z-Komponenten des zweiten elektromagnetischen Feldes des empfangenen zweiten Signals rechnerisch gebildet und aus diesen beiden Vektoren deren Skalarprodukt rechnerisch gebildet wird.

Bei einer ebenfalls bevorzugten Weiterbildung des erfindungsgemäßen Verfahrens ist vorgesehen, dass mithilfe des Skalarprodukts rechnerisch der Winkel zwischen den beiden Vektoren bestimmt wird.

Die vorstehenden optionalen Maßnahmen sind in vorteilhafter Weise dazu geeignet, das erfindungsgemäße Verfahren in kostengünstiger Weise zu realisieren.

Bei einer bevorzugten Ausführungsform des erfindungsgemäßen Verfahrens ist vorgesehen, dass der ermittelte Winkel einen vorbestimmten Schwellenwert von weitgehend Null Grad überschreitet, insbesondere ein Schwellenwert größer als 1 bis 10 Grad, vorzugsweise 1 bis 5 Grad.

Entsprechend einer bevorzugten Weiterbildung des erfindungsgemäßen Verfahrens ist vorgesehen, dass der Schwellenwert, der größer als Null Grad ist, mit geringer werdender Entfernung des Identifikationsgebers vom Fahrzeug vergrößert wird, wobei die Entfernung vorzugsweise über eine Laufzeitmessung zwischen den Signalen, die zwischen Fahrzeug und Identifikationsgeber ausgetauscht werden, bestimmt wird.

Bei einer bevorzugten Ausführungsform des erfindungsgemäßen Verfahrens ist vorgesehen, dass die erste, zweite und dritte Antenne jeweils auf einer gleichen oder unterschiedlichen Frequenz im Frequenzbereich von 20 kHz bis 140 kHz, vorzugsweise auf ca. 125 kHz, vorzugsweise zeitlich versetzt, senden.

Durch diese vorstehenden optionalen Maßnahmen kann das erfindungsgemäße Verfahren noch sicherer gestaltet werden.

Die Erfindung ermöglicht in vorteilhafter Weise die Bereitstellung eines Fahrzeugzugangssystems zur Autorisierung der Nutzung eines Kraftfahrzeugs, bei dem das Fahrzeugzugangssystem die Ausführung mindestens eines Schritts eines erfindungsgemäßen Verfahrens bewirkt.

Die Erfindung ermöglicht weiter die Bereitstellung eines erfindungsgemäßen Fahrzeugzugangssystems zur Autorisierung der Nutzung eines Kraftfahrzeugs, bei dem das Fahrzeugzugangssystem die Ausführung mindestens eines Schritts eines Verfahrens nach einem der vorstehenden Ansprüche ausführt oder bewirkt und der Identifikationsgeber ein Funkschlüssel oder ein Smartphone ist, vorzugsweise mit einer Identifikationsgeber-Softwareanwendung, wie eine sog. App.

Die Erfindung schlägt ferner ein erfindungsgemäßes Fahrzeugzugangssystem zur Autorisierung der Nutzung eines Kraftfahrzeugs vor, bei dem der Identifikationsgeber ein mit einem Rechnerchip versehenes Smartphone, ein mit einem Rechnerchip versehener Funk-Fahrzeugschlüssel oder eine Chipkarte mit einem Rechnerchip ist.

Weiter schlägt die Erfindung ein erfindungsgemäßes Fahrzeugzugangssystem zur Autorisierung der Nutzung eines Kraftfahrzeugs vor, bei dem der Identifikationsgeber einen Sensor zur Bestimmung bzw. Ermittlung eines elektromagnetischen Feldes und/oder der Komponenten des elektromagnetischen Feldes aufweist, das von einer oder mehreren Fahrzeugantennen im Bereich des Identifikationsgebers erzeugt worden ist.

Die Erfindung schlägt eine Wegfahrsperre zur Autorisierung der Nutzung eines Kraftfahrzeugs vor, die die Ausführung mindestens eines Schritts eines erfindungsgemäßen Verfahrens bewirkt.

Ebenso schlägt die Erfindung ein Kraftfahrzeug vor, das die Ausführung mindestens eines Schritts eines erfindungsgemäßen Verfahrens bewirkt bzw. an der Ausführung beteiligt ist.

Schließlich wird ein Computerprogrammprodukt zur Steuerung mindestens eines Prozessors, der den Ablauf mindestens eines Schritts eines erfindungsgemäßen Verfahrens bewirkt, vorgeschlagen.

## Patentansprüche

1. Verfahren zur Autorisierung der Nutzung eines Kraftfahrzeugs, insbesondere ein zwei- oder vierrädriges Kraftfahrzeug, das mindestens eine erste und eine zweite Antenne aufweist, wobei die erste Antenne und die zweite Antenne räumlich voneinander beabstandet sind, mittels eines tragbaren Identifikationsgebers, der eine Identifikationsgeber-Antenne aufweist, mit den folgenden Schritten:
- die erste Fahrzeugantenne sendet ein erstes Signal aus, das von der Identifikationsgeber-Antenne empfangen wird,
- der Identifikationsgeber ermittelt zumindest eine der räumlichen Komponenten des ersten elektromagnetischen Feldes des empfangenen ersten Signals, vorzugsweise unter Verwendung eines winkelauflösenden Magnetfeldsensors,
- die zweite Fahrzeugantenne sendet ein zweites Signal aus, das von der Identifikationsgeber-Antenne empfangen wird,
- der Identifikationsgeber ermittelt zumindest eine der räumlichen Komponenten des zweiten elektromagnetischen Feldes des empfangenen zweiten Signals, insbesondere unter Verwendung des winkelauflösenden Magnetfeldsensors,
- der Identifikationsgeber überträgt die ermittelte zumindest eine räumliche Komponente des ersten elektromagnetischen Feldes des empfangenen ersten Signals und die ermittelte zumindest eine räumliche Komponente des zweiten elektromagnetischen Feldes des empfangenen zweiten Signals oder erste entsprechende Daten zum Fahrzeug, und
- ein erster Rechner, insbesondere ein Rechner im Fahrzeug, ermittelt den Winkel zumindest zwischen der ermittelten räumlichen Komponente des ersten elektromagnetischen Feldes des empfangenen ersten Signals und der ermittelten räumlichen Komponente des zweiten elektromagnetischen Feldes des empfangenen zweiten Signals,
**dadurch gekennzeichnet, dass**
- in einem weiteren Schritt die erste Fahrzeugantenne anstelle des ersten Signals das zweite Signal oder ein dem zweiten Signal ähnliches Signal aussendet und die zweite Fahrzeugantenne anstelle des zweiten Signals das erste Signal oder ein dem ersten Signal ähnliches Signal aussendet und das Kraftfahrzeug stellt nur dann ein erstes Autorisierungssignal zur Autorisierung der Nutzung des Kraftfahrzeugs bereit, wenn der ermittelte erste Winkel einen vorbestimmten ersten Schwellenwert überschreitet.

2. Verfahren zur Autorisierung der Nutzung eines Kraftfahrzeugs nach Anspruch 1, **dadurch gekennzeichnet, dass** der vorbestimmte erste Schwellenwert von dem Kraftfahrzeug bereitgestellt, der erste Schwellenwert von einem Rechner in dem Kraftfahrzeug mit dem ermittelten ersten Winkel verglichen wird und das Kraftfahrzeug nur dann das erste Autorisierungssignal bereitstellt, wenn der ermittelte erste Winkel den vorbestimmten ersten Schwellenwert überschreitet.

3. Verfahren zur Autorisierung der Nutzung eines Kraftfahrzeugs nach einem der vorstehenden Ansprüche, **dadurch gekennzeichnet, dass** das erste Signal oder ein dem ersten Signal ähnliches Signal und das zweite Signal oder ein dem zweiten Signal ähnliches Signal mehrfach abwechselnd von der ersten oder der zweiten Fahrzeugantenne gesendet, von dem Identifikationsgeber empfangen und die jeweils ermittelten zeitlich unterschiedlichen Winkel mit dem betreffenden vorbestimmten ersten Schwellenwert und nachfolgend mit dem betreffenden vorbestimmten zweiten Schwellenwert verglichen werden und bei einer jeweiligen Überschreitung des betreffenden ersten und zweiten vorbestimmten Schwellenwerts ein erstes und/oder ein zweites Autorisierungssignal zur Autorisierung der Nutzung des Kraftfahrzeugs von dem Kraftfahrzeug bereitgestellt wird.

4. Verfahren zur Autorisierung der Nutzung eines Kraftfahrzeugs nach einem der vorstehenden Ansprüche, **dadurch gekennzeichnet, dass** ein vorbestimmter erster und/oder ein vorbestimmter zweiter Schwellenwert von dem Kraftfahrzeug in verschlüsselter Datenform und/oder in anderen Daten verborgen bereitgehalten wird.

5. Verfahren zur Autorisierung der Nutzung eines Kraftfahrzeugs nach einem der vorstehenden Ansprüche, **dadurch gekennzeichnet, dass** die erste Fahrzeugantenne mehrfach unmittelbar hintereinander ein erstes Signal aussendet bevor die zweite Fahrzeugantenne einmal oder mehrfach unmittelbar hintereinander ein zweites Signal aussendet und die ersten und zweiten Signale von dem Identifikationsgeber zur Ermittlung des Winkels zwischen den räumlichen Komponenten des ersten und des zweiten elektromagnetischen Feldes empfangen werden.

6. Verfahren zur Autorisierung der Nutzung eines Kraftfahrzeugs nach Anspruch 5, **dadurch gekennzeichnet, dass** die Aussendung des ersten und/oder zweiten Signals zufallsgesteuert von dem Kraftfahrzeug vorgenommen wird.

7. Verfahren zur Autorisierung der Nutzung eines Kraftfahrzeugs nach einem der vorstehenden Ansprüche, **dadurch gekennzeichnet, dass** die Signalstärke bzw. Feldstärke der ersten und/oder der zweiten Fahrzeugantenne im Verlauf der Autorisierungsprüfung variiert wird,

8. Verfahren zur Autorisierung der Nutzung eines Kraftfahrzeugs nach Anspruch 7, **dadurch gekennzeichnet, dass** die Signalstärke bzw. Feldstärke der ersten und/oder der zweiten Fahrzeugantenne im Verlauf der Autorisierungsprüfung und/oder von Autorisierungsprüfung zu Autorisierungsprüfung zufallsgesteuert von dem Kraftfahrzeug variiertwird.

9. Verfahren zur Autorisierung der Nutzung eines Kraftfahrzeugs nach einem der vorstehenden Ansprüche, **dadurch gekennzeichnet, dass** der Zeitabstand zwischen der Aussendung des ersten Signals durch die erste Fahrzeugantenne und der Aussendung des zweiten Signals durch die zweite Fahrzeugantenne zeitlich so kurz, aber verschieden von Null, gewählt wird, dass der vom Fahrer mitgeführte Identifikationsgeber beim Zugehen des Fahrers auf das Fahrzeug weitgehend nicht bewegt wird und daher die Ermittlung des Winkels zumindest zwischen der ermittelten räumlichen Komponente des ersten elektromagnetischen Feldes des empfangenen ersten Signals und der ermittelten räumlichen Komponente des zweiten elektromagnetischen Feldes des empfangenen zweiten Signals durch die Bewegung des Fahrers bzw. durch die damit verbundene Bewegung des Identifikationsgebers weitgehend nicht verfälscht bzw. nicht unbrauchbar wird.

10. Verfahren zur Autorisierung der Nutzung eines Kraftfahrzeugs nach einem der vorstehenden Ansprüche, **dadurch gekennzeichnet, dass** das Kraftfahrzeug eine weitere, dritte Antenne aufweist, die von der ersten und der zweiten Antenne jeweils räumlich beabstandet ist und dass in analoger Weise der Winkel zumindest zwischen der ermittelten räumlichen Komponente des ersten elektromagnetischen Feldes des empfangenen ersten Signals und der ermittelten räumlichen Komponente des dritten elektromagnetischen Feldes eines von der dritten Antenne ausgesandten und von dem Identifikationsgeber empfangenen dritten Signals bestimmt wird.

11. Verfahren zur Autorisierung der Nutzung eines Kraftfahrzeugs nach einem der vorstehenden Ansprüche, **dadurch gekennzeichnet, dass** die vom Identifikationsgeber ermittelten räumlichen Komponenten des ersten elektromagnetischen Feldes des empfangenen ersten Signals, die x-, y- und z-Komponenten des elektromagnetischen Feldes eines ersten kartesischen Koordinatensystems sind.

12. Verfahren zur Autorisierung der Nutzung eines Kraftfahrzeugs nach einem der vorstehenden Ansprüche, **dadurch gekennzeichnet, dass** die vom Identifikationsgeber ermittelten räumlichen Komponenten des zweiten elektromagnetischen Feldes des empfangenen zweiten Signals die x-, y- und z-Komponenten des elektromagnetischen Feldes weitgehend die Komponenten in Bezug auf das erste kartesische Koordinatensystem sind, weitgehend, weil sich das bei der Ermittlung der Komponenten zugrunde liegende kartesische Koordinatensystem bzw. Bezugssystem bei geringfügigen Bewegungen des Identifikationsgebers in sehr kurzen Zeiträumen zwischen der wiederholten Ermittlung der Winkel räumlich nur geringfügig verändert.

13. Verfahren zur Autorisierung der Nutzung eines Kraftfahrzeugs nach einem der vorstehenden Ansprüche, **dadurch gekennzeichnet, dass** die vom Identifikationsgeber ermittelten räumlichen Komponenten des dritten elektromagnetischen Feldes des empfangenen dritten Signals die x-, y- und z-Komponenten des elektromagnetischen Feldes weitgehend die des ersten kartesischen Koordinatensystems sind.

14. Verfahren zur Autorisierung der Nutzung eines Kraftfahrzeugs nach einem der vorstehenden Ansprüche, **dadurch gekennzeichnet, dass** mindestens ein erster Vektor aus den vom Identifikationsgeber ermittelten x-, y- und z-Komponenten des ersten elektromagnetischen Feldes des empfangenen ersten Signals und ein zweiter Vektor aus den vom Identifikationsgeber ermittelten x-, y- und z-Komponenten des zweiten elektromagnetischen Feldes des empfangenen zweiten Signals rechnerisch gebildet und aus diesen beiden Vektoren deren Skalarprodukt rechnerisch gebildet wird.

15. Verfahren zur Autorisierung der Nutzung eines Kraftfahrzeugs nach einem der vorstehenden Ansprüche, **dadurch gekennzeichnet, dass** mithilfe des Skalarprodukts rechnerisch der Winkel zwischen den beiden Vektoren bestimmt wird.

16. Verfahren zur Autorisierung der Nutzung eines Kraftfahrzeugs nach einem der vorstehenden Ansprüche, **dadurch gekennzeichnet, dass** der ermittelte Winkel einen vorbestimmten Schwellenwert von weitgehend Null Grad überschreitet, insbesondere ein Schwellenwert größer als 1 bis 1O Grad, insbesondere 1 bis 5 Grad.

17. Verfahren zur Autorisierung der Nutzung eines Kraftfahrzeugs nach einem der vorstehenden Ansprüche, **dadurch gekennzeichnet, dass** der Schwellenwert, der größer als Null Grad ist, mit geringer werdender Entfernung des Identifikationsgebers vom Fahrzeug vergrößert wird, wobei die Entfernung insbesondere über eine Laufzeitmessung zwischen den Signalen, die zwischen Fahrzeug und Identifikationsgeber ausgetauscht werden, bestimmt wird.

18. Verfahren zur Autorisierung der Nutzung eines Kraftfahrzeugs nach einem der vorstehenden Ansprüche, **dadurch gekennzeichnet, dass** die erste, zweite und dritte Antenne jeweils auf einer gleichen oder unterschiedlichen Frequenz im Frequenzbereich von 20 kHz bis 140 kHz, insbesondere auf ca. 125 kHz, insbesondere zeitlich versetzt, senden.

19. Fahrzeugzugangssystem zur Autorisierung der Nutzung eines Kraftfahrzeugs, mit einer ersten und einer zweiten Antenne, einem ersten Rechner und einem Identifikationsgeber, in dem das Fahrzeugzugangssystem geeignet ist, ein Verfahren nach einem der Ansprüche 1 - 18 auszuführen.

20. Fahrzeugzugangssystem zur Autorisierung der Nutzung eines Kraftfahrzeugs, **dadurch gekennzeichnet, dass** das Fahrzeugzugangssystem die Ausführung eines Verfahrens nach einem der vorstehenden Ansprüche ausführt oder bewirkt und der Identifikationsgeber ein Funkschlüssel oder ein Smartphone, insbesondere mit einer Identifikationsgeber-Softwareanwendung, wie eine sog. App, ist.

21. Fahrzeugzugangssystem zur Autorisierung der Nutzung eines Kraftfahrzeugs nach Anspruch 20, **dadurch gekennzeichnet, dass** der Identifikationsgeber ein mit einem Rechnerchip versehenes Smartphone, ein mit einem Rechnerchip versehener Funk-Fahrzeugschlüssel oder eine Chipkarte mit Rechnerchip ist.

22. Fahrzeugzugangssystem zur Autorisierung der Nutzung eines Kraftfahrzeugs nach Anspruch 20 oder 21, **dadurch gekennzeichnet, dass** der Identifikationsgeber einen Sensor zur Bestimmung bzw. Ermittlung eines elektromagnetischen Felds und/oder der Komponenten des elektromagnetischen Feldes aufweist, das von einer oder mehreren Fahrzeugantennen im Bereich des Identifikationsgebers erzeugt worden ist.

23. Wegfahrsperre zur Autorisierung der Nutzung eines Kraftfahrzeugs, mit einer ersten und einer zweiten Antenne, einem ersten Rechner und einem Identifikationsgeber, in dem die Wegfahrsperre geeignet ist, ein Verfahren nach einem der Ansprüche 1 - 18 auszuführen.

24. Computerprogrammprodukt zur Autorisierung der Nutzung eines Kraftfahrzeugs, umfassend Befehle, die bewirken, dass das Fahrzeugsystem des Anspruchs 19 die Verfahrensschritte nach einem der Ansprüche 1 - 18 ausführt.

## Claims

1. Method for authorizing the use of a motor vehicle, in particular a two-wheeled or four-wheeled motor vehicle, which has at least a first and a second antenna, wherein the first antenna and the second antenna are spatially remote from one another, by way of a portable identification transmitter that has an identification transmitter antenna, having the following steps:
- the first vehicle antenna emits a first signal that is received by the identification transmitter antenna,
- the identification transmitter establishes at least one of the spatial components of the first electromagnetic field of the received first signal, preferably using an angle-resolving magnetic field sensor,
- the second vehicle antenna emits a second signal that is received by the identification transmitter antenna,
- the identification transmitter establishes at least one of the spatial components of the second electromagnetic field of the received second signal, in particular using the angle-resolving magnetic field sensor,
- the identification transmitter transmits the established at least one spatial component of the first electromagnetic field of the received first signal and the established at least one spatial component of the second electromagnetic field of the received second signal or first corresponding data to the vehicle, and
- a first computer, in particular a computer in the vehicle, establishes the angle at least between the established spatial component of the first electromagnetic field of the received first signal and the established spatial component of the second electromagnetic field of the received second signal,
**characterized in that**,
- in a further step, the first vehicle antenna emits, instead of the first signal, the second signal or a signal similar to the second signal and the second vehicle antenna emits, instead of the second signal, the first signal or a signal similar to the first signal, and the motor vehicle provides a first authorization signal for authorizing the use of the motor vehicle only when the established first angle exceeds a predetermined first threshold value.

2. Method for authorizing the use of a motor vehicle according to Claim 1, **characterized in that** the predetermined first threshold value is provided by the motor vehicle, the first threshold value is compared with the established first angle by a computer in the motor vehicle, and the motor vehicle provides the first authorization signal only when the established first angle exceeds the predetermined first threshold value.

3. Method for authorizing the use of a motor vehicle according to either of the preceding claims, **characterized in that** the first signal or a signal similar to the first signal and the second signal or a signal similar to the second signal are transmitted repeatedly alternately by the first or the second vehicle antenna and received by the identification transmitter, and the respectively established temporally different angles are compared with the relevant predetermined first threshold value and then with the relevant predetermined second threshold value and, in the event of a respective exceedance of the relevant first and second predetermined threshold value, a first and/or a second authorization signal for authorizing the use of the motor vehicle is provided by the motor vehicle.

4. Method for authorizing the use of a motor vehicle according to one of the preceding claims, **characterized in that** a predetermined first and/or a predetermined second threshold value is kept concealed by the motor vehicle in encrypted data form and/or in other data.

5. Method for authorizing the use of a motor vehicle according to one of the preceding claims, **characterized in that** the first vehicle antenna emits a first signal repeatedly immediately after one another before the second vehicle antenna emits a second signal once or repeatedly immediately after one another, and the first and second signals are received by the identification transmitter in order to establish the angle between the spatial components of the first and of the second electromagnetic field.

6. Method for authorizing the use of a motor vehicle according to Claim 5, **characterized in that** the emission of the first and/or second signal is performed by the motor vehicle in a randomly controlled manner.

7. Method for authorizing the use of a motor vehicle according to one of the preceding claims, **characterized in that** the signal strength or field strength of the first and/or of the second vehicle antenna is varied during the authorization test.

8. Method for authorizing the use of a motor vehicle according to Claim 7, **characterized in that** the signal strength or field strength of the first and/or of the second vehicle antenna is varied during the authorization test and/or from authorization test to authorization test by the motor vehicle in a randomly controlled manner.

9. Method for authorizing the use of a motor vehicle according to one of the preceding claims, **characterized in that** the time difference between the emission of the first signal by the first vehicle antenna and the emission of the second signal by the second vehicle antenna is selected to be so short in time - but other than zero - that the identification transmitter carried by the driver is substantially not moved as the driver approaches the vehicle, and therefore the establishment of the angle at least between the established spatial component of the first electromagnetic field of the received first signal and the established spatial component of the second electromagnetic field of the received second signal is substantially not falsified or not unusable as a result of the movement of the driver or as a result of the movement, connected therewith, of the identification transmitter.

10. Method for authorizing the use of a motor vehicle according to one of the preceding claims, **characterized in that** the motor vehicle has a further third antenna that is spatially remote from the first and the second antenna, respectively, and **in that**, in the same way, the angle at least between the established spatial component of the first electromagnetic field of the received first signal and the established spatial component of the third electromagnetic field of a third signal emitted by the third antenna and received by the identification transmitter is determined.

11. Method for authorizing the use of a motor vehicle according to one of the preceding claims, **characterized in that** the spatial components, established by the identification transmitter, of the first electromagnetic field of the received first signal are the x, y and z components of the electromagnetic field of a first Cartesian coordinate system.

12. Method for authorizing the use of a motor vehicle according to one of the preceding claims, **characterized in that** the spatial components, established by the identification transmitter, of the second electromagnetic field of the received second signal, the x, y and z components of the electromagnetic field are substantially the components with reference to the first Cartesian coordinate system, substantially because the Cartesian coordinate system or reference system underlying the establishment of the components changes spatially only slightly upon slight movements of the identification transmitter in very short time periods between the repeated establishment of the angles.

13. Method for authorizing the use of a motor vehicle according to one of the preceding claims, **characterized in that** the spatial components, established by the identification transmitter, of the third electromagnetic field of the received third signal, the x, y and z components of the electromagnetic field are substantially those of the first Cartesian coordinate system.

14. Method for authorizing the use of a motor vehicle according to one of the preceding claims, **characterized in that** at least one first vector from the x, y and z components, established by the identification transmitter, of the first electromagnetic field of the received first signal and one second vector from the x, y and z components, established by the identification transmitter, of the second electromagnetic field of the received second signal is formed computationally, and their scalar product is formed computationally from these two vectors.

15. Method for authorizing the use of a motor vehicle according to one of the preceding claims, **characterized in that** the angle between the two vectors is determined computationally with the aid of the scalar product.

16. Method for authorizing the use of a motor vehicle according to one of the preceding claims, **characterized in that** the established angle exceeds a predetermined threshold value of substantially zero degrees, in particular a threshold value greater than 1 to 10 degrees, in particular 1 to 5 degrees.

17. Method for authorizing the use of a motor vehicle according to one of the preceding claims, **characterized in that** the threshold value, which is greater than zero degrees, is increased as the distance of the identification transmitter from the vehicle decreases, wherein the distance is in particular determined via a propagation time measurement between the signals that are exchanged between vehicle and identification transmitter.

18. Method for authorizing the use of a motor vehicle according to one of the preceding claims, **characterized in that** the first, second and third antenna each transmit on an identical or different frequency in the frequency range of 20 kHz to 140 kHz, in particular on about 125 kHz, in particular in a temporally offset manner.

19. Vehicle access system for authorizing the use of a motor vehicle, having a first and a second antenna, a first computer and an identification transmitter, in which the vehicle access system is suitable for executing a method according to one of Claims 1 - 18.

20. Vehicle access system for authorizing the use of a motor vehicle, **characterized in that** the vehicle access system executes or brings about the execution of a method according to one of the preceding claims and the identification transmitter is a radio key or a smartphone, in particular having an identification transmitter software application, such as what is known as an app.

21. Vehicle access system for authorizing the use of a motor vehicle according to Claim 20, **characterized in that** the identification transmitter is a smartphone provided with a computer chip, a radio vehicle key provided with a computer chip or a chip card having a computer chip.

22. Vehicle access system for authorizing the use of a motor vehicle according to Claim 20 or 21, **characterized in that** the identification transmitter has a sensor for determining or establishing an electromagnetic field and/or the components of the electromagnetic field that has been produced by one or more vehicle antennae in the region of the identification transmitter.

23. Immobilizer for authorizing the use of a motor vehicle, having a first and a second antenna, a first computer and an identification transmitter, in which the immobilizer is suitable for executing a method according to one of Claims 1 - 18.

24. Computer program product for authorizing the use of a motor vehicle, comprising commands that cause the vehicle system of Claim 19 to execute the method steps according to one of Claims 1 - 18.

## Revendications

1. Procédé d'autorisation de l'utilisation d'un véhicule automobile, en particulier d'un véhicule automobile à deux ou quatre roues, qui comporte au moins une première et une deuxième antenne, la première antenne et la deuxième antenne étant spatialement espacées l'une de l'autre, au moyen d'un transmetteur d'identification portable qui comporte une antenne de transmetteur d'identification, le procédé comprenant les étapes suivantes :
- la première antenne de véhicule émet un premier signal qui est reçu par l'antenne du transmetteur d'identification,
- le transmetteur d'identification détermine au moins une des composantes spatiales du premier champ électromagnétique du premier signal reçu, de préférence à l'aide d'un capteur de champ magnétique à résolution angulaire,
- la deuxième antenne de véhicule émet un deuxième signal qui est reçu par l'antenne du transmetteur d'identification,
- le transmetteur d'identification détermine au moins une des composantes spatiales du deuxième champ électromagnétique du deuxième signal reçu, notamment à l'aide du capteur de champ magnétique à résolution angulaire,
- le transmetteur d'identification transmet l'au moins une composante spatiale déterminée du premier champ électromagnétique du premier signal reçu et l'au moins une composante spatiale déterminée du deuxième champ électromagnétique du deuxième signal reçu ou des premières données correspondantes au véhicule, et
- un premier calculateur, en particulier un calculateur du véhicule, détermine l'angle au moins entre la composante spatiale déterminée du premier champ électromagnétique du premier signal reçu et la composante spatiale déterminée du deuxième champ électromagnétique du deuxième signal reçu,
**caractérisé en ce que**
- dans une étape supplémentaire, la première antenne de véhicule émet le deuxième signal ou un signal similaire au deuxième signal à la place du premier signal et la deuxième antenne de véhicule émet le premier signal ou un signal similaire au premier signal à la place du deuxième signal et le véhicule automobile ne fournit alors un premier signal d'autorisation destiné à autoriser l'utilisation du véhicule automobile que lorsque le premier angle déterminé dépasse une première valeur de seuil prédéterminée.

2. Procédé d'autorisation de l'utilisation d'un véhicule automobile selon la revendication 1, **caractérisé en ce que** la première valeur de seuil prédéterminée est fournie par le véhicule automobile, la première valeur de seuil est comparée au premier angle déterminé par un calculateur du véhicule automobile et le véhicule automobile ne reçoit alors le premier signal d'autorisation que lorsque le premier angle déterminé dépasse la première valeur de seuil prédéterminée.

3. Procédé d'autorisation de l'utilisation d'un véhicule automobile selon l'une des revendications précédentes, **caractérisé en ce que** le premier signal ou un signal similaire au premier signal et le deuxième signal ou un signal similaire au deuxième signal sont émis alternativement plusieurs fois par la première ou la deuxième antenne de véhicule, sont reçus par le transmetteur d'identification et les différents angles respectivement déterminés dans le temps sont comparés à ladite première valeur de seuil prédéterminée puis à ladite deuxième valeur de seuil prédéterminée et, si lesdites première et deuxième valeurs de seuil prédéterminées sont respectivement dépassées, un premier et/ou un deuxième signal d'autorisation d'utilisation du véhicule automobile est/sont fourni(s) par le véhicule automobile.

4. Procédé d'autorisation de l'utilisation d'un véhicule automobile selon l'une des revendications précédentes, **caractérisé en ce qu'**une première et/ou une deuxième valeur de seuil prédéterminée sont maintenue disponibles par le véhicule automobile sous la forme de données cryptées et/ou en étant cachées dans d'autres données.

5. Procédé d'autorisation de l'utilisation d'un véhicule automobile selon l'une des revendications précédentes, **caractérisé en ce que** la première antenne de véhicule émet un premier signal plusieurs fois de manière directement successive avant que la deuxième antenne de véhicule n'envoie une ou plusieurs fois un deuxième signal de manière directement successive et les premier et deuxième signaux sont reçus par le transmetteur d'identification pour déterminer l'angle entre les composantes spatiales du premier et du deuxième champ électromagnétique.

6. Procédé d'autorisation de l'utilisation d'un véhicule automobile selon la revendication 5, **caractérisé en ce que** la transmission du premier et/ou du deuxième signal est effectuée de manière commandée aléatoirement par le véhicule automobile.

7. Procédé d'autorisation de l'utilisation d'un véhicule automobile selon l'une des revendications précédentes, **caractérisé en ce que** l'intensité du signal ou le champ de la première et/ou de la deuxième antenne de véhicule est modifié au cours du contrôle d'autorisation.

8. Procédé d'autorisation de l'utilisation d'un véhicule automobile selon la revendication 7, **caractérisé en ce que** l'intensité du signal ou le champ de la première et/ou de la deuxième antenne de véhicule est modifié de manière commandée aléatoirement par le véhicule automobile au cours du contrôle d'autorisation et/ou d'un contrôle d'autorisation à l'autre.

9. Procédé d'autorisation de l'utilisation d'un véhicule automobile selon l'une des revendications précédentes, **caractérisé en ce que** l'intervalle de temps entre l'émission du premier signal par la première antenne de véhicule et l'émission du deuxième signal par la deuxième antenne de véhicule est choisi pour être temporellement si court, mais différent de zéro, que le transmetteur d'identification porté par le conducteur n'est pas dans une large mesure déplacé lorsque le conducteur s'approche du véhicule et donc la détermination de l'angle au moins entre la composante spatiale déterminée du premier champ électromagnétique du premier signal reçu et la composante spatiale déterminée du deuxième champ électromagnétique du deuxième signal reçu n'est pas dans une large mesure falsifiée ou inutilisable en raison du mouvement du conducteur ou du mouvement associé du transmetteur d'identification.

10. Procédé d'autorisation de l'utilisation d'un véhicule automobile selon l'une des revendications précédentes, **caractérisé en ce que** le véhicule automobile comporte une troisième antenne supplémentaire qui est espacée spatialement de la première et de la deuxième antenne et **en ce que** de manière analogue l'angle au moins entre la composante spatiale déterminée du premier champ électromagnétique du premier signal reçu et la composante spatiale déterminée du troisième champ électromagnétique d'un troisième signal émis par la troisième antenne et reçu par le transmetteur d'identification est déterminé.

11. Procédé d'autorisation de l'utilisation d'un véhicule automobile selon l'une des revendications précédentes, **caractérisé en ce que** les composantes spatiales, déterminées par le transmetteur d'identification, du premier champ électromagnétique du premier signal reçu sont les composantes x, y et z du champ électromagnétique d'un premier système de coordonnées cartésiennes.

12. Procédé d'autorisation de l'utilisation d'un véhicule automobile selon l'une des revendications précédentes, **caractérisé en ce que** les composantes spatiales, déterminées par le transmetteur d'identification, du deuxième champ électromagnétique du deuxième signal reçu les composantes x, y et z du champ électromagnétique sont dans une large mesure les composantes par référence au premier système de coordonnées cartésiennes, dans une large mesure parce que le système de coordonnées cartésiennes ou système de référence, sur la base duquel les composantes sont déterminées, ne change spatialement que légèrement dans de très courts intervalles de temps entre les déterminations répétées de l'angle en cas de légers mouvements du transmetteur d'identification.

13. Procédé d'autorisation de l'utilisation d'un véhicule automobile selon l'une des revendications précédentes, **caractérisé en ce que** les composantes spatiales, déterminées par le transmetteur d'identification, du troisième champ électromagnétique du troisième signal reçu, les composantes x, y et z du champ électromagnétique sont dans une large mesure celle du premier système de coordonnées cartésiennes.

14. Procédé d'autorisation de l'utilisation d'un véhicule automobile selon l'une des revendications précédentes, **caractérisé en ce qu'**au moins un premier vecteur est formé à partir des composantes x, y et z, déterminées par le transmetteur d'identification, du premier champ électromagnétique du premier signal reçu et un deuxième vecteur est formé à partir des composantes x, y et z, déterminées par le transmetteur d'identification, du deuxième champ électromagnétique du deuxième signal reçu et le produit scalaire de ces deux vecteurs est formé par calcul.

15. Procédé d'autorisation de l'utilisation d'un véhicule automobile selon l'une des revendications précédentes, **caractérisé en ce que** l'angle entre les deux vecteurs est déterminé par calcul à l'aide du produit scalaire.

16. Procédé d'autorisation de l'utilisation d'un véhicule automobile selon l'une des revendications précédentes, **caractérisé en ce que** l'angle déterminé dépasse une valeur de seuil prédéterminée qui est dans une large mesure de zéro degré, notamment une valeur de seuil supérieure à une valeur allant de 1 à 10 degrés, notamment de 1 à 5 degrés.

17. Procédé d'autorisation de l'utilisation d'un véhicule automobile selon l'une des revendications précédentes, **caractérisé en ce que** la valeur de seuil, qui est supérieure à zéro degré, est augmentée à mesure que la distance entre le transmetteur d'identification et le véhicule diminue, la distance étant déterminée notamment par une mesure de temps de propagation entre les signaux échangés entre le véhicule et le transmetteur d'identification.

18. Procédé d'autorisation de l'utilisation d'un véhicule automobile selon l'une des revendications précédentes, **caractérisé en ce que** la première, la deuxième et la troisième antenne émettent chacune à des fréquences identiques ou différentes dans la gamme de fréquences allant de 20 kHz à 140 kHz, notamment à environ 125 kHz, en particulier en étant temporellement décalées.

19. Système d'accès à un véhicule permettant d'autoriser l'utilisation d'un véhicule automobile, ledit système comprenant une première et une deuxième antenne, un premier calculateur et un transmetteur d'identification, le système d'accès à un véhicule étant apte à mettre en œuvre un procédé selon l'une des revendications 1 à 18.

20. Système d'accès à un véhicule permettant d'autoriser l'utilisation d'un véhicule automobile, **caractérisé en ce que** le système d'accès à un véhicule réalise ou provoque la mise en œuvre d'un procédé selon l'une des revendications précédentes et le transmetteur d'identification est une clé radio ou un smartphone, comprenant notamment une application logicielle de transmetteur d'identification, telle que ce que l'on appelle une appli.

21. Système d'accès à un véhicule permettant d'autoriser l'utilisation d'un véhicule automobile selon la revendication 20, **caractérisé en ce que** le transmetteur d'identification est un smartphone muni d'une puce informatique, une clé de véhicule radio munie d'une puce informatique ou une carte à puce munie d'une puce informatique.

22. Système d'accès de véhicule permettant d'autoriser l'utilisation d'un véhicule automobile selon la revendication 20 ou 21, **caractérisé en ce que** le transmetteur de signal d'identification comporte un capteur destiné à déterminer ou identifier un champ électromagnétique et/ou les composantes du champ électromagnétique qui a été généré par une ou plusieurs antennes de véhicule dans la zone du transmetteur d'identification.

23. Dispositif anti-démarrage permettant d'autoriser l'utilisation d'un véhicule automobile, ledit dispositif comprenant une première et une deuxième antenne, un premier calculateur et un transmetteur d'identification, le dispositif anti-démarrage étant apte à mettre en œuvre un procédé selon l'une des revendications 1 à 18.

24. Progiciel permettant d'autoriser l'utilisation d'un véhicule automobile, ledit progiciel comprenant des instructions amenant le système de véhicule selon la revendication 19 à exécuter les étapes du procédé selon l'une des revendications 1 à 18.
